# EUROPÄISCHE PATENTSCHRIFT

(11) **EP 1 260 395 B1**
(45) Veröffentlichungstag und Bekanntmachung des Hinweises auf die Patenterteilung: **12.07.2006**
(21) Anmeldenummer: 02010540.9
(22) Anmeldetag: 10.05.2002
(51) Int. Cl.: B60J 10/00, B23P 19/04, B25B 27/00

(54) **Vorrichtung zur Klebebefestigung von Dichtungen**
Adhesive mounting apparatus for seals
Système de montage avec adhésif des joints d'étanchéité

(30) Priorität: 17.05.2001 DE 20108378 U
(43) Veröffentlichungstag der Anmeldung: 27.11.2002
(73) Patentinhaber: Wittner, Carmen, 54675 Roth a. d. Our (DE)
(72) Erfinder: Wittner, Carmen, 54675 Roth a. d. Our (DE)
(74) Vertreter: Bernhardt, Reinold

(56) Entgegenhaltungen:
- EP-A- 0 604 033
- DE-A- 19 837 508
- GB-A- 2 253 659
- US-A- 4 908 179

## Beschreibung

Die Erfindung betrifft eine Vorrichtung zur Klebebefestigung von einen Hohlraum aufweisenden, insbesondere schlauchartigen Dichtungen an einem Dichtungsträger, mit einer Einrichtung zur Druckbeaufschlagung des Hohlraums unter Anpressung eines Klebebereichs der Dichtung gegen den Dichtungsträger, wobei die Einrichtung zur Druckbeaufschlagung wenigstens ein in seiner Form an die Dichtung angepasstes Halteelement für die Abstützung der Dichtung außerhalb der Klebefläche gegen den durch die Druckbeaufschlagung erzeugten Innendruck aufweist.

Träger schlauchartiger Dichtungen sind z.B. Fahrzeugtüren, wobei die Dichtung an der Tür-innenseite im Randbereich als geschlossener Ring umläuft und mit dem Türblech verklebt ist. Zur Verklebung der biegeschlaffen Dichtung mit der Tür werden Vorrichtungen verwendet, welche über den gesamten Ringumfang gleichzeitig einen Anpressdruck erzeugen. Hierzu werden z.B. eng aneinandergrenzend angeordnete Druckstempel verwendet, deren Druckfläche an die dem Druckstempel jeweils gegenüberliegende Kontur der Fahrzeugtür angepasst ist. Infolge Fertigungstoleranzen bei der Türherstellung kann die Form der Stempeldruckfläche von der Kontur der Tür an der Klebestelle abweichen. Dadurch wird stellenweise der zur ordnungsgemäßen Verklebung erforderliche Anpressdruck nicht erreicht. Im Extremfall verbleiben unverklebte Bereiche.

In durch Benutzung bekannten Vorrichtungen der eingangs erwähnten wird die Ausdehnung der Dichtung bei Druckbeaufschlagung des Hohlraums dazu verwendet, um den zur Klebung erforderlichen Anpressdruck zu erzeugen. Trotz allseitiger Wirkung des Innendrucks in dem Hohlraum kann es jedoch auch bei diesen Vorrichtungen zu unzureichender Anpressung der Dichtung an den Dichtungsträger im Klebebereich kommen.

Eine Vorrichtung zur Klebebefestigung der eingangs erwähnten Art geht aus der DE 198 37 508 A1 hervor. In dieser bekannten Vorrichtung wird ein Halteelement mit U-förmigem Querschnitt verwendet, in welches eine schlauchförmige Dichtung einlegbar ist, wobei die Klebefläche an der offenen Seite des Halteelements zur Anordnung kommt. Durch das Halteelement wird die Dichtung zwischen dem Dichtungsträger und dem Halteelement derart eingeschlossen, dass Ausdehnungsmöglichkeiten der Dichtung durch die Druckbeaufschlagung im wesentlichen nur radial, d.h. senkrecht zur Klebefläche, bestehen. Damit kommt es zu einer festen, nicht durch Querausdehnungen beeinträchtigten Verklebung. Andererseits erlaubt der Einschluß eine Beaufschlagung mit verhältnismäßig hohem Innendruck, so dass durch Fertigungstoleranzen bedingte Maßschwankungen am Dichtungsträger durch entsprechend große Ausdehnung der Dichtung ausgeglichen werden können. Dabei erfordert das Einbringen der Dichtung in die U-förmige Halterinne relativ viel Aufwand.

Der vorliegenden Erfindung liegt die Aufgabe zugrunde, eine solche Vorrichtung dadurch weiterzubilden, dass der Aufwand zum Einbringen der Dichtung in die Vorrichtung verringert ist.

Die diese Aufgabe lösende Vorrichtung nach der Erfindung ist dadurch gekennzeichnet, dass der Haltekörper zwei Halteelemente aufweist, welche relativ zueinander aus einer Öffungsstellung, in welcher Dichtung auf eines der beiden Halteelemente aufsteckbar ist, in eine Abstützstellung, in welcher die beiden Halteelemente unter Bildung der Halterinne zusammengefügt sind, bewegbar sind.

Das Aufstecken der Dichtung, wozu in der Öffnungsstellung genügend Freiraum besteht, erfordert nur einen geringen Aufwand, wobei gleichzeitig eine positionsgenaue Anordnung der Dichtung innerhalb der Klebevorrichtung gesichert ist.

Während je nach Formsteifigkeit der Dichtung eine teilweise Abstützung der Dichtung außerhalb des Klebebereichs genügen kann, ist in einer Ausführungsform der Erfindung die Dichtung durch die beiden Halteelemente und den Dichtungsträger in wenigstens einer die Dichtung schneidenden Ebene vollständig oder nahezu vollständig umschließbar.

In einer bevorzugten Ausführungsform der Erfindung weist die Einrichtung zur Druckbeaufschlagung ein Lochstanzwerkzeug mit einem am Lochende öffnenden Kanal für die Zuführung von Druckfluid auf. Mit Hilfe dieses Werkzeugs lässt sich ein Loch in die Wand der Dichtung stanzen. Danach verbleibt das Lochende des Stanzwerkzeugs in dem Hohlraum, so dass dem Hohlraum über das Stanzwerkzeug Druckfluid zugeführt werden kann.

Zweckmäßig ist das Lochstanzwerkzeug durch einen zu der Dichtung hin öffnenden Kanal im Halteelement geführt.

Bei der Druckbeaufschlagung der durch die beiden Halteelemente, and den Dichtungsträger eingezwängten Dichtung liegt der an das Lochstanzwerkzeug angrenzende Lochrand abdichtend gegen das Lochstanzwerkzeug an, so dass es nicht zum Austritt von Druckfluid aus dem Hohlraum kommen kann.

In weiterer Ausgestaltung der Erfindung weist das Lochstanzwerkzeug nahe dem Lochende bzw. der Stanzschneide eine einen Anschlag für die Dichtung bildende Ringschulter auf. Vorteilhaft trägt auch diese Ringschulter zur Abdichtung des Hohlraums an der Durchstichstelle bei.

Zweckmäßig ist der Vorschub des z.B. pneumatisch betriebenen Lochstanzwerkzeugs einstellbar und vorzugsweise derart eingestellt, dass die Stanzschneide am Lochende maximal bis zu der dem gestanzten Öffnungsloch gegenüberliegenden Hohlraumwand vordringt. Vorteilhaft wird durch diese Einstellung verhindert, dass die Dichtung durch das vordringende Lochstanzwerkzeug beschädigt wird.

In weiterer Ausgestaltung der Erfindung sind an der Dichtung mehrere Druckfluideinspeisungsstellen vorgesehen. Durch diese Maßnahme lässt es sich insbesondere bei schlauchartigen Dichtungen vermeiden, dass es durch zu lange Strömungswege zu unerwünschter, die genaue Lage der Dichtung beeinträchtigender Walkarbeit der Dichtung kommt.

Besonders vorteilhaft lässt sich die erfindungsgemäße Vorrichtung bei schlauchartigen Dichtungen einsetzen, die als geschlossener Ring ausgebildet sind. Hier können über den Ringumfang verteilt Einspeisungsstellen angeordnet sein. Eine Vielzahl von Halteelementen ist segmentartig in Ringform angeordnet, so dass die Ringdichtung zwischen diesen Segmenten und dem Dichtungsträger, z.B. einer Fahrzeugtür, nahezu vollständig eingeschlossen werden kann. Natürlich kommt als Dichtung auch ein beidseitig geschlossener Schlauch in Betracht.

In weiterer Ausgestaltung der Erfindung können mehrere Halteelemente zwecks Einschluß der Dichtung durch die Halteelemente und den Dichtungsträger relativ zueinander beweglich sein, z.B. entlang einer Linearführung.

Zweckmäßig ist ferner das wenigstens eine Halteelement oder eine Anordnung aus mehreren Halteelementen als Ganzes entlang einer Führung zwecks Zubringen der Dichtung zum Dichtungsträger bewegbar.

In weiterer vorteilhafter Ausgestaltung der Erfindung ist eine Einrichtung zur Steuerung der Zuführung von Druckfluids vorgesehen, welche unterschiedlichen Erfordernissen entsprechend Druckfluid in unterschiedlichen Mengen und/oder mit unterschiedlichen Drücken zuführen kann.

Die Erfindung soll nun anhand von Ausführungsbeispielen und der beiliegenden, sich auf diese Ausführungsbeispiele beziehenden Zeichnungen näher erläutert werden. Es zeigen:

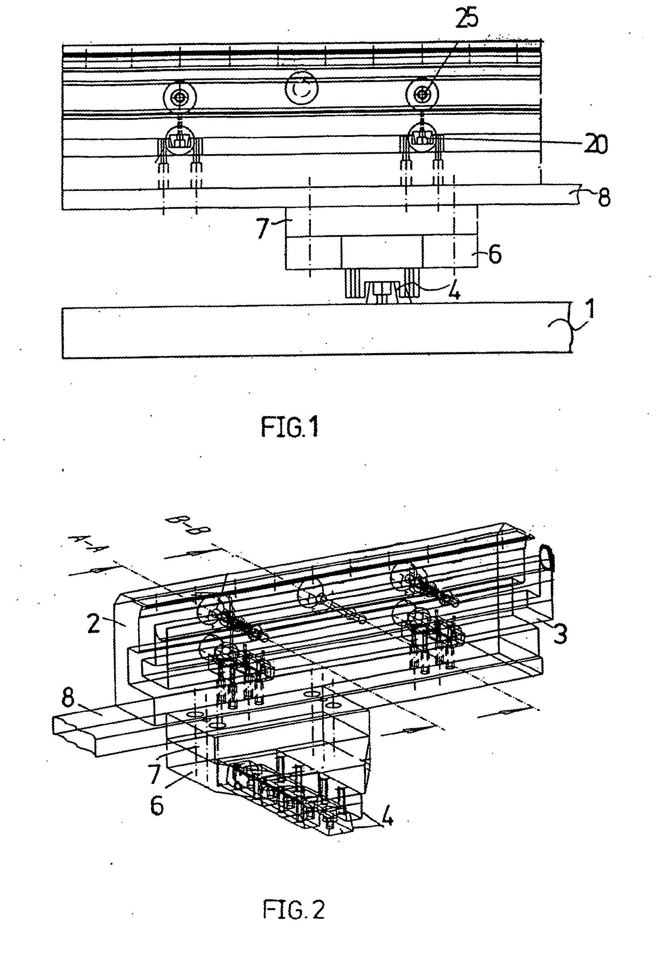

- Fig. 1: einen Ausschnitt aus einer erfindungsgemäßen Vorrichtung zur Klebebefestigung von Dichtungen an Fahrzeugtüren, in einer Seitenansicht,
- Fig. 2: den Ausschnitt von Fig. 1 in einer perspektivischen Ansicht,
- Fig. 3: die Vorrichtung von Fig. 1 und 2 in der Ansicht gemäß Schnitt B-B von Fig. 2,
- Fig. 4 bis 6: Details der Ansicht von Fig. 3 gemäß verschiedenen Arbeitsphasen der Vorrichtung, und
- Fig. 7 und 8: Detailansichten der Vorrichtung von Fig. 1 und 2 gemäß Schnitt A-A von Fig. 2.

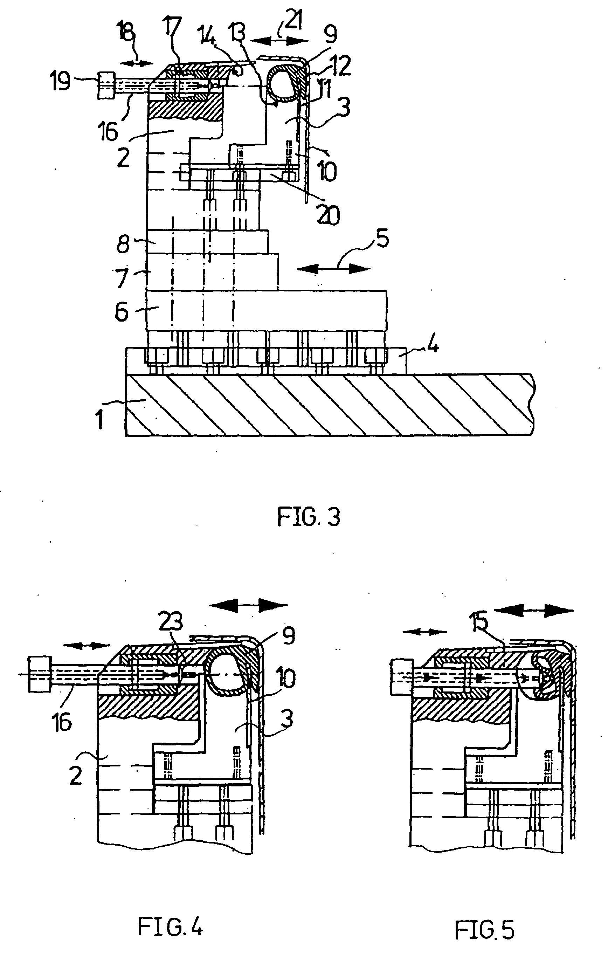

Mit dem Bezugszeichen 1 ist in den Figuren eine Basisplatte bezeichnet, auf der eine Anordnung von Halteelementen 2 und 3 entlang einer Schienenführung 4 gemäß Doppelpfeil 5 (Fig. 3) hin- und herbewegbar ist. Zwischen den Halteelementen 2 und 3 und der Schienenführung 4 sind in dem gezeigten Ausführungsbeispiel drei Distanzplatten 6 bis 8 angeordnet, durch die dafür gesorgt ist, dass die Halteelemente 2 und 3 in bezug auf die Basisplatte 1 eine gewünschte Abstandsposition einnehmen.

Das Bezugszeichen 9 weist auf eine in den Fig. 3 bis 6 im Querschnitt sichtbare Gummidichtung hin, welche schlauchartig als geschlossener Ring ausgebildet und zur Randabdichtung einer bei 10 ausschnittsweise dargestellten Fahrzeugtür vorgesehen ist.

Die biegeschlaffe Gummidichtung 9 ist in der in Fig. 3 gezeigten Position, wenn die Fahrzeugtür 10 noch von der Vorrichtung entfernt ist, auf einen von dem Halteelement 3 vorstehenden flexiblen Streifen 11 aus Blech oder Kunststoff aufsteckbar, wobei die Dichtung 9 im übrigen gegen eine an die Form der Dichtung angepasste Fläche 13 des Halteelements 3 zur Anlage kommt. Der flexible, durch Querausnehmungen geschwächte Streifen 11 ist in einen Schlitz einsteckbar, welcher zwischen einem schlauchartigen Teil und einer Zunge der Dichtung 9 gebildet ist. Die Zunge weist eine Klebefläche 12 auf, die durch eine kurz vor der Verklebung zu entfernende Schutzfolie abgedeckt ist.

Wie das Halteelement 3 weist auch das Halteelement 2 eine an die Form der Dichtung angepasste Fläche 14 auf, die teilweise durch eine in das Halteelement 2 integrierte Zunge 15 aus einem weichen Material, vorzugsweise aus einem Kunststoff, gebildet ist.

Wie die Fig. 3 bis 6 ferner zeigen, ist in dem Halteelement 2 ein Kanal gebildet, durch den ein Lochstanzbolzen 16 geführt und mit Hilfe eines in den Kanal eingesetzten Pneumatikzylinders 17 gemäß Doppelpfeil 18 hin- und herbewegbar ist. An den einen Längsdurchgang aufweisenden Lochstanzbolzen 16 ist bei 19 in eine flexible Zuführung für ein Druckfluid anschließbar, in dem betreffenden Ausführungsbeispiel für Druckluft.

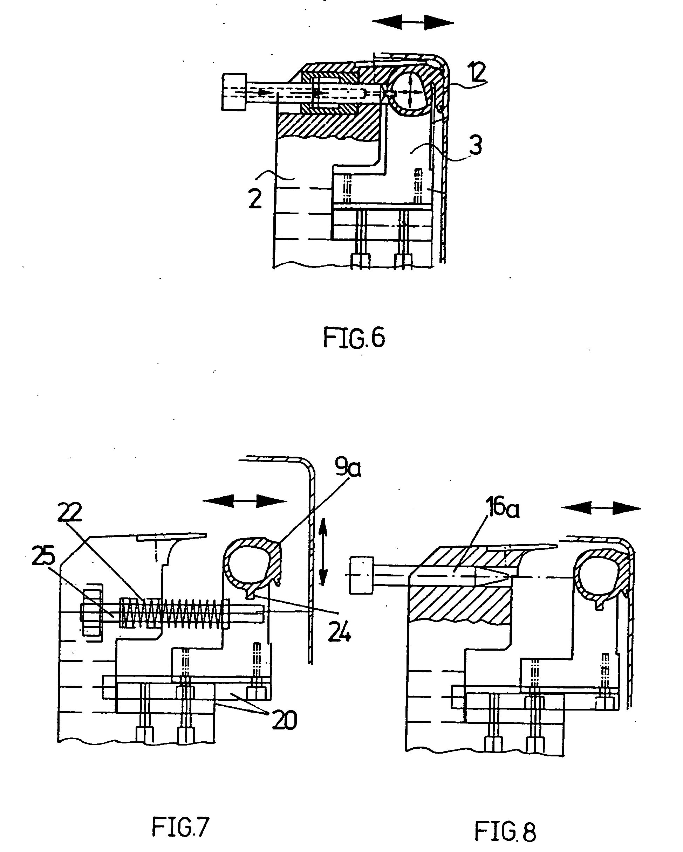

Während das Halteelement 2 und die Distanzelemente 7 und 8 untereinander starr verbunden sind, ist das Halteelement 3 entlang einer Schienenführung 20 gemäß Doppelpfeil 21 relativ zu dem Halteelement 2 hin- und herbewegbar. Wie aus Fig. 7 hervorgeht, erfolgt diese Bewegung in Richtung des Halteelements 2 gegen die Kraft einer Schraubenfeder 22, durch die sich eine mit dem Halteelement 3 starr verbundene und gegen das Halteelement 2 gleitbewegliche Führungsstange 25 erstreckt.

Es versteht sich, dass zur Klebeverarbeitung der als geschlossener Ring ausgebildeten Dichtung 9 die hier beschriebene Baueinheit vielfach segmentweise in Ringform angeordnet ist. Lediglich der flexible Streifen 11 übergreift mehrere Segmente und ist ggf. als geschlossener Ring wie die Dichtung 9 ausgebildet.

Nachfolgend wird ein Klebevorgang beschrieben.

In der in Fig. 3 gezeigten Position des Halteelements 3 wird in Abwesenheit der Fahrzeugtür 10 die Dichtung 9 unter Anlage gegen die Fläche 13 auf den flexiblen Streifen 11 aufgesteckt. Vor Zuführung der Fahrzeugtür 10 senkrecht zur Richtung des Doppelpfeils 21 wird die genannte Schutzfolie von der Klebefläche 12 entfernt. Nach ihrer Zuführung in die Ausgangsstellung für den Klebevorgang ist die Fahrzeugtür 10 noch etwa 1 bis 2 mm von der Klebefläche 12 entfernt.

In Fortführung des Klebevorgangs wird nun der aus dem Halteelement 2 und den Distanzplatten 6 bis 8 gebildete Block gemäß Doppelpfeil 5 in Richtung zur Fahrzeugtür 10 vorgeschoben, wobei sich das Halteelement 3 gemäß Doppelpfeil 21 entlang der Schienenführung 20 gegen die Kraft der Feder 22 auf das Halteelement 2 zu bis in die in den Fig. 4 bis 6 gezeigte Endstellung bewegt. Dabei erreicht nach kurzer Verschiebedistanz die Klebefläche 12 die Fahrzeugtür 10, wo sie exakt in der gewünschten Position zur Anlage und Anhaftung kommt.

Wie aus den Fig. 4 und 6 hervorgeht, ist in der Endstellung die Dichtung 9 nahezu vollständig durch die Halteelemente 2 und 3 und die Fahrzeugtür 10 umschlossen, wobei die Dichtung beinahe über ihren gesamten Umfang gegen die genannten Teile anliegt.

In weiterer Fortführung des Klebevorgangs wird nun der Lochstanzbolzen 16 in seine in Fig. 5 gezeigte Vorschubendstellung bewegt, in welcher er ein Loch in die flexible Wand des schlauchförmigen Teils der Dichtung 9 gestanzt hat, seine Stanzschneide jedoch nicht oder nicht wesentlich in die dem gestanzten Loch gegenüberliegende Hohlraumwand der Dichtung 9 eingedrungen ist.

Mit dem Zurückziehen des Lochstanzbolzens 16 beginnt die Druckluftzufuhr durch den Lochstanzbolzen 16 hindurch in den Hohlraum der Dichtung 9. In der in Fig. 6 gezeigten Endstellung liegt die durchstanzte Wand der Dichtung 9 gegen die Ringschulter 23 an, während das Lochende des Bolzens 16 noch in den Hohlraum der Dichtung 9 hineinragt. Durch den Rundumeinschluß der Dichtung 9 ist selbst bei hohem Innendruck an der Durchstoßstelle für Gasdichtheit gesorgt.

Die nahezu rundum eingeschlossene Dichtung 9 wird durch die an die Form der Dichtung angepassten Halteelemente 2 und 3 gegen den Innendruck derart zusammengehalten, dass sie hur in Richtung zu der Fahrzeugtür 10 ausweichen kann. Dabei kommt es zu einer Ausdehnung fast nur in radialer Richtung. Durch den Einschluß und die damit verbundene sichere Halterung der Dichtung können hohe Drücke verwendet werden, die dafür sorgen, dass die Dichtfläche 12 auch dann vollständig gegen die Fahrzeugtür anliegt, wenn die ihr zugewandte Gegenfläche infolge Fertigungstoleranzen nicht genau in der vorgesehenen Nennposition liegt. Zur Variation des Anpressdrucks ist die Druckfluidzufuhr steuerbar.

Zum Abschluß des Klebevorgangs bewegt sich das Halteelement 2 mit den Distanzplatten 6 bis 8 entlang der Schienenführung 4 gemäß Doppelpfeil 5 nun in umgekehrter Richtung in die in Fig. 3 gezeigte Position, wobei die Zunge 14 die Dichtung 9 in Richtung senkrecht zum Doppelpfeil 21 freigibt. Die Fahrzeugtür 10 wird nun in dieser Richtung zurückgefahren, wobei der flexible Streifen 11 aus der nun mit der Tür 10 verbundenen Dichtung 9 herausgezogen wird. Die Zunge 14 aus einem weichen Material sorgt dafür, dass die bereits lackierte Fahrzeugtür bei dem Klebevorgang nicht beschädigt wird.

Verteilt über den Umfang der Dichtung 9 sind mehrere Druckeinspeisungsstellen vorgesehen, so dass durch kurze Strömungswege eine unerwünschte Walkbewegung der Dichtung bei der Druckbeaufschlagung vermieden ist.

Bei den Schnittdarstellungen von Fig. 7 und 8 ist eine gegenüber den in den vorangehenden Figuren gezeigten Dichtung 9 veränderte Dichtung 9a dargestellt, die an das Halteelement 3 nicht über einen flexiblen Streifen anheftbar ist, sondern zur Anheftung mit einer von der Dichtung 9 vorstehenden Zunge 24 in eine entsprechende Ausnehmung in dem Halteelement 3 eingreift.

Vorteilhaft bedarf das Halteelement 3, das entlang der Führung 20 gegen das Halteelement 2 verschiebbar ist, zum selbsttätigen Einschließen und Freigeben der Dichtung 9 keinen zusätzlichen Antrieb. Der durch das Halteelement 3 ausgeübte Vor- und Öffnungsdruck wird über die Feder 22 stufenlos eingestellt. Die Position der Arbeits- und Ruhelage des Halteelements 3 kann über Einstellschrauben stufenlos justierbar sein.

Über die Führung 20, die präzise z.B. durch ein Kugelumlauflager gebildet sein kann, sind die Halteelemente in jeder Arbeitsphase zueinander exakt positioniert, wobei eine wartungsfreie Verbindung zwischen den Teilen hergestellt ist.

Es versteht sich, dass die Halteelemente in Form und Lage dem räumlichen Verlauf der Klebefläche angepasst sein und von der in den Figuren gezeigten Linearform abweichen können. Entsprechend kann auch die Richtung der Lochstanzbolzen mit den Druckfluidaustrittsöffnungen je nach räumlichem Verlauf der Klebefläche in unterschiedlichen Raumrichtungen angeordnet sein. Der in den Halteelementen gebildete Formsitz für die Dichtung lässt sich stets so einarbeiten, dass eine optimale Klebedruckerzeugung im Klebebereich in Richtung auf den Dichtungsträger erfolgt.

## Patentansprüche

1. Vorrichtung zur Klebebefestigung einer einen Hohlraum aufweisenden Dichtung (9) an einem Dichtungsträger (10) mit einer Einrichtung zur Druckbeaufschlagung des Hohlraums unter Anpressung eines Klebebereichs (12) der Dichtung (9) gegen den Dichtungsträger (10), wobei die Einrichtung zur Druckbeaufschlagung wenigstens einen Haltekörper (2,3) mit einer an die Form der Dichtung (9) angepassten Halterinne umfaßt, in welcher die Dichtung am Umfang mit Ausnahme der klebeflüche gegen den durch die Druckbeaufschlagung erzeugten Innendruck abgestützt ist, **daduch gekennzeichnet,**
dass der Haltekörper zwei Halteelemente (2,3) aufweist, welche relativ zueinander aus einer Öffnungsstellung, in welcher die Dichtung (9) auf eines der beiden Halteelemente (2,3) aufsteckbar ist, in eine Abstützstellung, in welcher die beiden Halteelemente (2,3) unter Bildung der Halterinne zusammengefügt sind, bewegbar sind.

2. Vorrichtung nach Anspruch 1,
**dadurch gekennzeichnet,**
**dass** die Dichtung (9) durch die beiden Halteelemente (2,3) und den Dichtungsträger (10) wenigstens in einer die Dichtung schneidenden Ebene vollständig umschließbar ist.

3. Vorrichtung nach Anspruch 1 oder 2,
**dadurch gekennzeichnet,**
**dass** die Einrichtung zur Druckbeaufschlagung ferner ein Lochstanzwerkzeug (16) mit einem am Lochende öffnenden Kanal für die Zuführung von Druckfluid aufweist.

4. Vorrichtung nach Anspruch 3,
**dadurch gekennzeichnet,**
**dass** das Lochstanzwerkzeug (16) durch einen zu der Dichtung (9) öffnenden Kanal in dem Halteelement (2) geführt ist.

5. Vorrichtung nach Anspruch 3 oder 4,
**dadurch gekennzeichnet,**
**dass** das Lochstanzwerkzeug (16) eine gegen die Dichtung (9) anlegbare Ringschulter (23) aufweist.

6. Vorrichtung nach einem der Ansprüche 3 bis 5,
**dadurch gekennzeichnet,**
**dass** der Vorschub des Lochstanzwerkzeugs (16) einstellbar und vorzugsweise derart eingestellt ist, dass die Stanzschneide maximal bis zu dem der gestanzten Öffnung gegenüberliegenden Hohlraumwand der Dichtung (9) vordringt.

7. Vorrichtung nach einem der Ansprüche 1 bis 6,
**dadurch gekennzeichnet,**
**dass** an der Dichtung (9) mehrere, im Abstand zueinander angeordnete Einspeisungsöffnungen für Druckfluid vorgesehen sind.

8. Vorrichtung nach einem der Ansprüche 1 bis 7,
**dadurch gekennzeichnet,**
**dass** die Dichtung eine, vorzugsweise als geschlossener Ring ausgebildete, schlauchartige Dichtung ist.

9. Vorrichtung nach einem der Ansprüche 1 bis 8,
**dadurch gekennzeichnet,**
**dass** wenigstens eines der beiden Halteelemente (2) vielfach segmentweise in einer Ringanordnung angeordnet ist.

10. Vorrichtung nach einem der Ansprüche 1 bis 9,
**dadurch gekennzeichnet,**
**dass** die beiden Halteelemente (2,3) gegeneinander entlang einer Führung (20) verschiebbar sind.

## Claims

1. Apparatus for mounting a cavity-containing seal (9) by an adhesive on a seal carrier (10), having a device for pressurizing the cavity as an adhesive region (12) of the seal (9) is pressed against the seal carrier (10), the pressurizing device comprising at least one holding body (2, 3) having a holding channel which is matched to the shape of the seal (9) and in which the seal is supported at the periphery, with the exclusion of the adhesive surface, against the internal pressure generated by the pressurization,
**characterized in that** the holding body has two holding elements (2, 3), which are movable one relative to the other out of an opening position, in which the seal (9) can be mounted onto one of the two holding elements (2, 3), into a supporting position, in which the two holding elements (2, 3) are joined together to form the holding channel.

2. Apparatus according to Claim 1,
**characterized in that** the seal (9) can be fully enclosed by the two holding elements (2, 3) and the seal carrier (10), at least within a plane which cuts the seal.

3. Apparatus according to Claim 1 or 2,
**characterized in that** the pressurizing device further has a hole-punching tool (16) having a duct, which opens at the hole end, for the supply of pressure fluid.

4. Apparatus according to Claim 3,
**characterized in that** the hole-punching tool (16) is guided through a duct in the holding element (2), which opens onto the seal (9).

5. Apparatus according to Claim 3 or 4,
**characterized in that** the hole-punching tool (16) has an annular shoulder (23) which can be placed against the seal (9).

6. Apparatus according to one of Claims 3 to 5,
**characterized in that** the advancement of the hole-punching tool (16) is adjustable and is preferably set such that the punch cutting edge advances maximally up to the cavity wall of the seal (9) which lies opposite the punched opening.

7. Apparatus according to one of Claims 1 to 6,
**characterized in that** on the seal (9) there are provided a plurality of mutually spaced feed-in openings for pressure fluid.

8. Apparatus according to one of Claims 1 to 7,
**characterized in that** the seal is a hose-like seal configured preferably as a closed ring.

9. Apparatus according to one of Claims 1 to 8,
**characterized in that** at least one of the two holding elements (2) is arranged often segmentally in an annular layout.

10. Apparatus according to one of Claims 1 to 9,
**characterized in that** the two holding elements (2, 3) are mutually displaceable along a guide (20).

## Revendications

1. Dispositif pour la fixation par adhésif d'un joint d'étanchéité (9) présentant un espace creux sur un support (10) de joint avec un dispositif pour soumettre l'espace creux à une pression avec compression d'une zone adhésive (12) du joint (9) contre le support (10) du joint, le dispositif pour la sollicitation en pression présentant au moins un corps de fixation (2, 3) avec une rainure de fixation adaptée à la forme du joint (9), dans laquelle le joint est appuyé, à l'exception de la surface adhésive, contre la pression interne produite par la sollicitation en pression, **caractérisé en ce que** le corps de fixation présente deux éléments de fixation (2, 3) qui peuvent être déplacés l'un par rapport à l'autre à partir d'une position ouverte, dans laquelle le joint (9) peut être placé sur un des deux éléments de fixation (2, 3), dans une position d'appui, dans laquelle les deux éléments de fixation (2, 3) sont assemblés en formant la rainure de fixation.

2. Dispositif selon la revendication 1, **caractérisé en ce que** le joint d'étanchéité (9) peut être entouré complètement par les deux éléments de fixation (2, 3) et le support (10) du joint, au moins dans un plan passant dans le joint.

3. Dispositif selon la revendication 1 ou 2, **caractérisé en ce que** le dispositif pour la sollicitation en pression présente en outre un emporte-pièce (16) avec un canal s'ouvrant en l'extrémité du trou pour l'alimentation en fluide sous pression.

4. Dispositif selon la revendication 3, **caractérisé en ce que** l'emporte-pièce (16) est guidé dans un canal s'ouvrant vers le joint d'étanchéité (9) dans l'élément de fixation (2).

5. Dispositif selon la revendication 3 ou 4, **caractérisé en ce que** l'emporte-pièce (16) présente un épaulement annulaire (23) pouvant se placer contre le joint d'étanchéité (9).

6. Dispositif selon l'une quelconque des revendications 3 à 5, **caractérisé en ce que** le déplacement vers l'avant de l'emporte-pièce (16) est réglable et de préférence réglé de telle manière que le tranchant s'avance au maximum jusqu'à la paroi de l'espace creux du joint (9) opposée à l'ouverture découpée.

7. Dispositif selon l'une quelconque des revendications 1 à 6, **caractérisé en ce qu'**on a prévu, sur le joint d'étanchéité (9), plusieurs ouvertures d'alimentation pour le fluide sous pression, disposées à une certaine distance les unes des autres.

8. Dispositif selon l'une quelconque des revendications 1 à 7, **caractérisé en ce que** le joint d'étanchéité est un joint en forme de flexible tuyau, de préférence réalisé sous forme d'un anneau fermé.

9. Dispositif selon l'une quelconque des revendications 1 à 8, **caractérisé en ce qu'**au moins un des deux éléments de fixation (2) est disposé sous forme de segments multiples dans une disposition annulaire.

10. Dispositif selon l'une quelconque des revendications 1 à 9, **caractérisé en ce que** les deux éléments de fixation (2, 3) peuvent être déplacés l'un par rapport à l'autre le long d'un dispositif de guidage (20).
